# EUROPEAN PATENT SPECIFICATION

(11) **EP 2 959 952 B1**
(45) Date of publication and mention of the grant of the patent: **10.05.2017**
(21) Application number: 15169343.9
(22) Date of filing: 27.05.2015
(51) Int. Cl.: B01D 11/02, B27K 7/00, B01D 21/00, B01D 21/02, B01D 21/24, B01D 21/26, B08B 3/06, B08B 3/08, B08B 3/10, B08B 3/14

(54) **APPARATUS AND PROCESS FOR CORK DECONTAMINATION**
KORKDEKONTAMINIERUNGSVERFAHREN UND ANLAGE
PROCEDE ET INSTALLATION DE DECONTAMINATION DU LIEGE

(30) Priority: 28.05.2014 IT SS20140002
(43) Date of publication of application: 30.12.2015
(73) Proprietor: Federici, Pasqualino Lorenzo, 07100 Sassari (IT)
(72) Inventor: Federici, Pasqualino Lorenzo, 07100 Sassari (IT)
(74) Representative: Leone, Mario

(56) References cited:
- EP-A1- 1 849 572
- WO-A2-01/41989

## Description

The present invention relates to an apparatus and a process for the decontamination of corks from polluting particles of natural fossil origin, such as tannin and siloxanes, tannic acid, powders which are incorporated during the growth of the organic material and so on.

The use of the cork such as high quality raw material for implementing consumer products, above all by referring to the exploitation of the cork stopper to be used for wines, takes place only after the raw material has been subjected to a series of selections and natural washing, thereafter a mechanical degreasing is performed. Subsequently, a product finishing is performed, which makes it suitable to be used in the food field.

In this field, it is necessary adopting a decontamination process for removing polluting substances and earthy residues, providing at least a washing and subsequent drying, to make the cork surfaces ready for the final finishing.

Conventional applications for abating powders, earthy residues, tannin and tannic acid from semi-finished products made of cork by means of common washing procedures in water and detergents are known. Such washing procedures generally involve the use of additives and relatively long process time.

However, the known washing systems do not succeed in eliminating those particles which have been incorporated in the cork superficially, in particular during the tree growth.

An additional drawback is then represented by the energy and chemical expense for the attempted decontamination process with the conventional processes.

The European patent application Nr. EP 1,849,572 A1 describes a decontamination device wherein the corks are subjected to mechanical vibration cycles during the conventional washing.

The International patent application Nr. WO 01/41989 A1 describes a process for attenuating the taste of the cork stopper using active carbons.

The technical problem underlying the present invention is to make available an apparatus and a process for the cork decontamination able to obviate the drawbacks described with reference to the state of art.

According to a first aspect, the invention aims at proposing a decontamination system and a process able to separate and neutralize the polluting substances in a quick and effective way.

An additional object is to propose an apparatus and a process, advantageous from the technological point of view, and able to recover the value of the cork raw material.

Advantageously, one aims at exploiting the corks, resulting from the artisan and industrial transformation of the raw material, with a very high added value.

A third object is to propose a system and a process for implementing at the same time both a treatment process for eliminating all heavier residues that the corks have incorporated during growth, and a process for neutralizing all acid particles and siloxanes, to obtain corks without any polluting substance, ready to be used in any form of wine bottling and other.

Such objects are reached by a cork-treating apparatus and process for the removal of contaminants as defined by the enclosed independent claims.

In particular, the invention relates to a cork-treating apparatus for the removal of contaminants, comprising:
- a washing device provided with an inlet for introducing the cork to be decontaminated, further provided with nozzles for spraying a decontamination liquid and at least one discharge outlet for delivering the decontamination liquid;
- a collector pipe for collecting the decontamination liquid from said washing device;
- a cyclone separator for purifying by gravitation the decontamination liquid coming from the washing device through the collector pipe, said cyclone separator comprising:
   o an inlet for receiving a sodium bicarbonate solution,
   o a discharge for contaminants, and
   o a discharge for recirculating the purified decontamination liquid;
- a heater for heating the purified decontamination liquid;
- a recirculation pipe for recirculating the purified decontamination liquid from the heater to the washing device;
- a pump for recirculating the purified decontamination liquid from the cyclone separator to the washing device through the heater; and
- a delivery pipe for delivering a sodium bicarbonate solution to the cyclone separator.

In a preferred embodiment of the invention decontamination liquid is a water-based mixture, in particular a water-based mixture comprising sea water, or water with a saline content substantially corresponding to that of the sea water, that is with a sodium chloride content comprised between 15 and 60 kg per cubic meter, and hydrogen peroxide.

In a further preferred embodiment, such mixture can be added with a sugar, for example glucose, sucrose, fructose, and with a wax, in particular a wax of animal origin (beeswax, lanolin), of vegetable origin (carnauba, jojoba) or of mineral origin (paraffin).

Furthermore, another preferred detail of the apparatus is that the heater is equipped with a thermostat to supply a mixture with a constant temperature.

Furthermore, the invention relates to a cork-treating process for the removal of contaminants in an apparatus as specified above, comprising the steps of:
- introducing the corks to be decontaminated in a washing device through an inlet of the washing device;
- spraying the cork to be decontaminated with a decontamination liquid through spraying nozzles;
- collecting the decontamination liquid and making it to circulate in a cyclone separator;
- purifying by gravitation the decontamination liquid collected from the washing device in the cyclone separator;
- circulating the purified decontamination liquid coming from the cyclone separator a a heater by means of a pump;
- heating the purified decontamination liquid into the heater; and
- circulating the heated purified decontamination liquid from the heater to the spraying nozzles of the washing device.

In a preferred version of this process, the heater heats the decontamination liquid at a temperature higher than 60°C, for example 65°C.

The advantages which can be obtained with the above-specified apparatus and process mainly consist in the simplicity of the implementation thereof with the purpose of treating and neutralizing the polluting substances in the corks produced by the moulding processing.

Another advantage consists in the process cheapness and in the possibility of recovering in a concrete way the produced corks, even if with poor qualitative value.

An additional advantage consists in the possibility of obtaining a whole abatement of the polluting substances contained in the corks after decontamination.

A fourth advantage consists in the structural simplicity of the system and in the implementation exclusivity, with components and devices of new generation which cannot be found on the market, except electric motors.

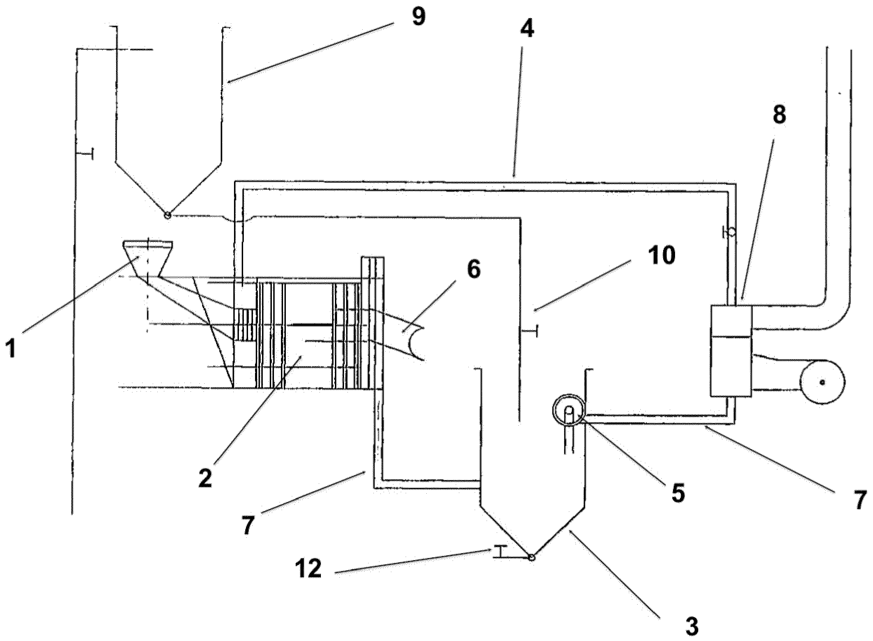

Additional features and advantages of the invention will result from the details description of an embodiment thereof, given by way of example and not with limitative purpose by referring to the enclosed drawing wherein the single figure 1 shows schematically a cork-treating apparatus for the removal of contaminants according to the invention.

By referring to the figure, a cork-treating apparatus for the removal of contaminants is described implementing the abatement of heavy particles, earth, powders and polluting substances of organic and chemical origin, resulting or deriving from treating raw material.

It comprises an inlet 1 of a flow of corks, in particular half-finished products made of cork or, more specifically, cut corks and/or corks modelled in the shape of stoppers intended for bottles to be used for wines and the like.

From the inlet 1 the corks access a washing device 2 provided in the form of a so-called scrubber, in particular a scrubber of horizontal type. It even has a section 6 for discharging the corks.

Under scrubber an apparatus is meant allowing to abate the concentration of substances existing in a gaseous stream, usually powders and acid micropollutants. These apparatuses find wide application in the fume cleaning plants of several chemical plants.

In the present case the scrubber does not act on a gaseous stream but on a flow of elements made of cork, characterized by a poor density, so that the scrubber can act as washing tower for decontamination purposes.

The washing device 2 is associated to a purifying unit constituted by a cyclone separator 3, even called cyclone separator; it carries out a mechanical separation by means of a rotating system easing the particles to be precipitated.

This purifying unit is important for the scrubber as it allows a self-cleaning function. The cyclone separator is constituted by a device obtaining the recycling of the cork decontamination water and the extraction, from the low portion, of the separated heavy residues.

Advantageously, the separation implemented by the separator is performed quickly and with structural simplicity through a complete depuration of the corks and of the washing waters, from any polluting substance.

By referring to the figure, a specific separator embodiment is described, but it is meant that there could exist many variants of how implementing the specific devices forming the system therewith the decontamination of cork and corks is carried out.

The washing device 2 is equipped with an inlet collector 4 in the higher portion thereof, wherein the flow of the products mixed to the water starts, for example products put into circulation by a pump 5 with variable flow rate, coming from a heater wherein a heating at constant temperature is performed.

The apparatus comprises a collector pipe 7 formed with a L-like tube connecting the lower portion of the scrubber 2 to the lower portion of the heater 8, it crosses the separator 3 and the pump 5 and it goes out from the higher portion, wherein an additional collector duct 4 connects to the scrubber and to the higher portion of the heater 8 which preferably is a heater to heat the products pre-mixed to neutralize the acids delivered by the cork.

Therefore, according to the invention, the group absorbing the pollutants is constituted by two devices, that is the scrubber 2, which has the function of abating the heavy particles by means of washing the corks with water mixed with other washing products which will be specified hereinafter, and the cyclone separator, which has the function of separating the particles abated by the scrubber.

Furthermore, a mixing unit 9 is provided, which has the function of adjusting the pH by adding sodium bicarbonate. In this case a flow of deacidifying liquid is produced which is introduced into the washing device and, by means of a delivery duct 10, it feeds the pump for transporting the bicarbonate, through the scrubber, by forming a recycling.

In greater detail, the mixture is a water-based mixture, obtained from the sea water and treatment products which are introduced depending upon the volume and the quantity of cork which is treated.

Preferably, the apparatus further comprises a burner providing hot gases to the heater 8, which is equipped with a thermostat which has the task of keeping constant the temperature of the decontamination liquid starting the treatment for decontaminating the cork and the corks.

In an application example, the temperature of the mixture entering the first scrubber module 2 is 65 °C and that of the one entering the separator module 3 is 45°C.

By referring to the figure, the first system combined according to the invention is described, comprising a first scrubber 2 sending to corks an aqueous solution comprising the following products; sea water, bicarbonate and hydrogen peroxide for abating the pollutants, due to the difference in the thermal change and the specific weight of the pollutants.

A second washing of the corks, still with the washing device 2, provides an aqueous solution comprising hydrogen peroxide, wax, sugar and other products, apt to restore the raw material from all lesions caused by the first decontamination washing.

The second module, the cyclone separator 3, has the task of separating from the treating mixture the pollutants included in the cork, as these residues have a higher specific weight than precipitating water.

It is to be noted that the washing device comprises a series of spraying nozzles, arranged around the recirculation duct 4 and the collector pipe 7, connected to a recirculation pump 5, which from top to bottom spread over the corks with a tilted jet.

The nozzles, at one end, have an inlet duct connected to the recirculation pump 5, the pump is connected to the washing device 2 and to the basin of the cyclone separator 3 arranged downwards the scrubber, provided with discharge 12 of the residues.

The corks entering the scrubber 2 join the water jet from the not visible nozzles, so that upon travelling the inner space of the scrubber at the same time the separation of the pollutants from the cork is made easier.

Furthermore, the separated residues are incorporated by the liquid and dragged by gravity in the conus of the separator 3; preferably, the water feeding comprises a recirculation pump 5 sucking water from the higher portion of the separator placed below the washing device 2, and it introduces it into the ducts.

Downwards the separator 3, the neutralized acid residues are then destined to a discharge 12 therefrom they are directed to the disposal.

By summarizing, in the herein described example, a cork-treating apparatus for the removal of contaminants comprises a washing device 2 in the form of scrubber or washing tower, which is equipped with an inlet 1 therefrom elements made of cork are introduced, such as half-finished products or stoppers, which have to be decontaminated.

The washing device 2 comprises a plurality of spraying nozzles therefrom a decontamination liquid is sprayed over the corks, which then flows out from a suitable discharge outlet in a collector pipe 7.

The decontamination liquid is water-based and preferably it includes sodium chloride, with a saline content of 15 to 60 kg per cubic meter; as solution, sea water can be used. Hydrogen peroxide is added to the solution with the purpose of deacidifying it and obtaining a pH as close as possible to neutrality.

The decontamination liquid can be even added with a sugar, for example glucose, sucrose, fructose, and with a wax, in particular a wax of animal origin (beeswax, lanolin), of vegetable origin (carnauba, jojoba) or of mineral origin (paraffin).

Through the collector pipe 7 the liquid is introduced into a cyclone separator 3 or purifying cyclone, destined to separate the residues from the water. The separator 3 comprises an inlet therefrom sodium bicarbonate is introduced, a discharge 12 for eliminating the contaminants and an outlet therefrom the purified liquid is made to recirculate into the apparatus.

The apparatus further comprises a heater 8 apt to heat the decontamination liquid, equipped with a burner and a thermostat to obtain a liquid at constant temperature, preferably higher than 60°C, for example 65°C.

From the heater 8, the liquid is made to recirculate through a recirculation pipe 4 as far as the washing device 2 thanks to a pump 5 for recirculating the purified decontamination liquid from the cyclone separator 3 to the washing device 2 through the heater 8.

At last, a delivery pipe 10 is provided for delivering a sodium bicarbonate solution to the cyclone separator 3.

Therefore, in the herein described process the corks to be decontaminated are introduced into a washing device 2 through an inlet thereof 1, and therein they are sprayed with a decontamination liquid by means of spraying nozzles. The decontamination liquid is then collected and made to recirculate in a cyclone separator 3 wherein it is purified by gravity, and then it is made to recirculate in a heater 8, wherein it is heated at a prefixed temperature preferably higher than 60°C, by means of a pump 5, to be then recirculated to the spraying nozzles of the washing device 2.

To the above-described apparatus and cork-treating process for the removal of contaminants a person skilled in the art, with the purpose of satisfying additional and contingent needs, can introduce several additional modifications and variants, however all comprised within the protective scope of the present invention, as defined by the enclosed claims.

## Claims

1. A cork-treating apparatus for the removal of contaminants from cork, comprising:
• a washing device (2) provided with an inlet (1) for introducing the cork to be decontaminated, further provided with nozzles for spraying a decontamination liquid and at least one discharge outlet for delivering the decontamination liquid;
• a collector pipe (7) for collecting the decontamination liquid from said washing device (2);
• a cyclone separator (3) for purifying by gravitation the decontamination liquid coming from the washing device (2) through the collector pipe (7), said cyclone separator (3) comprising:
∘ an inlet for receiving a sodium bicarbonate solution,
∘ a discharge (12) for contaminants, and
∘ a discharge for recirculating the purified decontamination liquid;
• a heater (8) for heating the purified decontamination liquid;
• a recirculation pipe (4) for recirculating the purified decontamination liquid from the heater (8) to the washing device (2);
• a pump (5) for recirculating the purified decontamination liquid from the cyclone separator (3) to the washing device (2) through the heater (8); and
• a delivery pipe (10) for delivering a sodium bicarbonate solution to the cyclone separator (3).

2. The apparatus according to claim 1, wherein said decontamination liquid is a water-based mixture.

3. The apparatus according to claim 2, wherein said water-based mixture comprises sea water and hydrogen peroxide.

4. The apparatus according to claim 2 or 3, wherein said mixture is additivated with a sugar and with a wax.

5. The apparatus according to claim 4 wherein said heater is equipped with a thermostat for supplying mixture at a constant temperature.

6. A cork-treating process for the removal of contaminants in an apparatus according to one of claims 1 to 5, comprising:
• introducing the corks to be decontaminated in a washing device (2) through an inlet (1) of the washing device (2);
• spraying the corks to be decontaminated with a decontamination liquid through spraying nozzles (4);
• collecting the decontamination liquid and making it to circulate in a cyclone separator (3);
• purifying by gravitation the decontamination liquid collected from the washing device (2) in the cyclone separator (3);
• circulating the purified decontamination liquid coming from the cyclone separator (3) to a heater (8) by a pump (5);
• heating the purified decontamination liquid into the heater (8); and
• circulating the heated and purified decontamination liquid from the heater to the spraying nozzles (4) of the washing device (2).

7. The process according to claim 6, wherein said heater heats the decontamination liquid at a temperature higher than 60°C.

## Patentansprüche

1. Kork-Behandlungsapparat zum Entfernen von Verunreinigungen von Kork umfassend:
- eine Waschvorrichtung (2), die mit einem Einlass (1) zum Einbringen von Kork, der dekontaminiert werden soll, versehen ist, weiterhin versehen mit Düsen zum Sprühen einer Dekontaminationsflüssigkeit und zumindest einer Abgabeöffnung zur Lieferung der Dekontaminationsflüssigkeit;
- ein Sammelrohr (7) zum Sammeln der Dekontaminationsflüssigkeit von der Waschvorrichtung (2);
- ein Zyklonabscheider (3) zum Reinigung der Dekontaminationsflüssigkeit, die von der Waschvorrichtung (2) durch das Sammelrohr (7) kommt, durch Gravitation, wobei der Zyklonabscheider (3) umfasst:
- einen Einlass zum Empfangen einer Natriumbikarbonat-Lösung,
- einen Auslass (12) für Verunreinigungen, und
- einen Auslass zum Rezirkulieren der gereinigten Dekontaminationsflüssigkeit;
- eine Heizung (8) zum Erwärmen der gereinigten Dekontaminationsflüssigkeit;
- ein Rezirkulationsrohr (4) zum Rezirkulieren der gereinigten Dekontaminationsflüssigkeit von der Heizung (8) zu der Waschvorrichtung (2);
- eine Pumpe (5) zum Rezirkulieren der gereinigten Dekontaminationsflüssigkeit von dem Zyklonabscheider (3) zu der Waschvorrichtung (2) durch die Heizung (8); und
- ein Lieferrohr (10) zum Liefern einer Natriumbikarbonat-Lösung zu dem Zyklonabscheider (3).

2. Apparat nach Anspruch 1, wobei die Dekontaminationsflüssigkeit eine wasserbasierte Mischung ist.

3. Apparat nach Anspruch 2, wobei die wasserbasierte Mischung Meerwasser und Wasserstoffperoxyd umfasst.

4. Apparat nach Anspruch 2 oder 3, wobei die Mischung mit einem Zucker und einem Wachs additiviert ist.

5. Apparat nach Anspruch 4, wobei die Heizung ausgestattet ist mit einem Thermostat zur Bereitstellung einer Mischung bei einer konstanten Temperatur.

6. Kork-Behandlungsverfahren zum Entfernen von Verunreinigungen in einem Apparat nach einem der Ansprüche 1 bis 5, umfassend:
- Einbringen des Korks, der dekontaminiert werden soll, in eine Waschvorrichtung (2) durch einen Einlass (1) der Waschvorrichtung (2);
- Besprühen des Korks, der dekontaminiert werden soll, mit einer Dekontaminationsflüssigkeit durch Sprühdüsen (4);
- Sammeln der Dekontaminationsflüssigkeit und dieses dazu bringen in einen Zyklonabscheider (3) zu zirkulieren;
- Reinigen durch Gravitation der Dekontaminationsflüssigkeit, die von der Waschvorrichtung gesammelt wurde, in dem Zyklonabscheider (3);
- Zirkulieren der gereinigten Dekontaminationsflüssigkeit, die von dem Zyklonabscheider (3) kommt zu einer Heizung (8) durch eine Pumpe (5);
- Erwärmen der gereinigten Dekontaminationsflüssigkeit in der Heizung (8); und
- Zirkulieren der erwärmten und gereinigten Dekontaminationsflüssigkeit von der Heizung zu den Sprühdüsen (4) der Waschvorrichtung (2).

7. Verfahren nach Anspruch 6, wobei die Heizung die Dekontaminationsflüssigkeit auf eine Temperatur von höher als 60°C erwärmt.

## Revendications

1. Appareil de traitement du liège pour l'élimination de contaminants du liège, comprenant :
• un dispositif de lavage (2) doté d'une admission (1) pour introduire le liège à décontaminer, doté en outre de buses pour pulvériser un liquide de décontamination et d'au moins un refoulement d'évacuation pour l'alimentation en liquide de décontamination ;
• un tuyau collecteur (7) pour collecter le liquide de décontamination provenant dudit dispositif de lavage (2) ;
• un séparateur cyclone (3) pour purifier par gravitation le liquide de décontamination provenant du dispositif de lavage (2) à travers le tuyau collecteur (7), ledit séparateur cyclone (3) comprenant :
∘ une admission pour recevoir une solution de bicarbonate de sodium,
∘ une évacuation (12) pour les contaminants, et
∘ une évacuation pour la recirculation du liquide de décontamination purifié ;
• une unité de chauffage (8) pour chauffer le liquide de décontamination purifié ;
• un tuyau de recirculation (4) pour la recirculation du liquide de décontamination purifié provenant de l'unité de chauffage (8) vers le dispositif de lavage (2) ;
• une pompe (5) pour la recirculation du liquide de décontamination purifié provenant du séparateur cyclone (3) vers le dispositif de lavage (2) à travers l'unité de chauffage (8) ; et
• un tuyau d'alimentation (10) pour alimenter le séparateur cyclone (3) en une solution de bicarbonate de sodium.

2. Appareil selon la revendication 1, dans lequel ledit liquide de décontamination est un mélange à base d'eau.

3. Appareil selon la revendication 2, dans lequel ledit mélange à base d'eau comprend de l'eau de mer et du peroxyde d'hydrogène.

4. Appareil selon la revendication 2 ou 3, dans lequel ledit mélange est additivé à l'aide d'un sucre et d'une cire.

5. Appareil selon la revendication 4, dans lequel ladite unité de chauffage est équipée d'un thermostat pour fournir un mélange à une température constante.

6. Procédé de traitement du liège pour l'élimination de contaminants dans un appareil selon l'une des revendications 1 à 5, comprenant :
• l'introduction des lièges à décontaminer dans un dispositif de lavage (2) à travers une admission (1) du dispositif de lavage (2) ;
• la pulvérisation des lièges à décontaminer avec un liquide de décontamination à travers des buses de pulvérisation (4) ;
• la collecte du liquide de décontamination et sa mise en circulation dans un séparateur cyclone (3) ;
• la purification par gravitation du liquide de décontamination collecté à partir du dispositif de lavage (2) dans le séparateur cyclone (3) ;
• la mise en circulation du liquide de décontamination purifié provenant du séparateur cyclone (3) vers une unité de chauffage (8) par une pompe (5) ;
• le chauffage du liquide de décontamination purifié dans l'unité de chauffage (8) ; et
• la mise en circulation du liquide de décontamination purifié et chauffé provenant de l'unité de chauffage vers les buses de pulvérisation (4) du dispositif de lavage (2).

7. Procédé selon la revendication 6, dans lequel ladite unité de chauffage chauffe le liquide de décontamination à une température supérieure à 60 °C.
